# EUROPEAN PATENT SPECIFICATION

(11) **EP 1 701 012 B1**
(45) Date of publication and mention of the grant of the patent: **11.04.2007**
(21) Application number: 05003327.3
(22) Date of filing: 16.02.2005
(51) Int. Cl.: F01N 3/34, F01N 3/22

(54) **Exhaust gas purifying device**
Abgasreinigungsvorrichtung
Dispositif de purification de gaz d'échappement

(43) Date of publication of application: 13.09.2006
(73) Proprietor: Kwang Yang Motor Co., Ltd., Kaohsiung City (TW)
(72) Inventor: Huang, Hsiang-Hsi, Lin Ya District, Kaohsiung (TW); Chen, Chun-Hsiung, Chien Chen District, Kaohsiung (TW)
(74) Representative: Vossius & Partner

(56) References cited:
- US-A- 4 175 386
- US-A- 4 450 680
- PATENT ABSTRACTS OF JAPAN vol. 013, no. 143 (M-811), 7 April 1989 (1989-04-07) & JP 63 306255 A (TOYOTA MOTOR CORP), 14 December 1988 (1988-12-14)

## Description

The invention relates to an exhaust gas purifying system, more particularly to an exhaust gas purifying system for a vehicle engine.

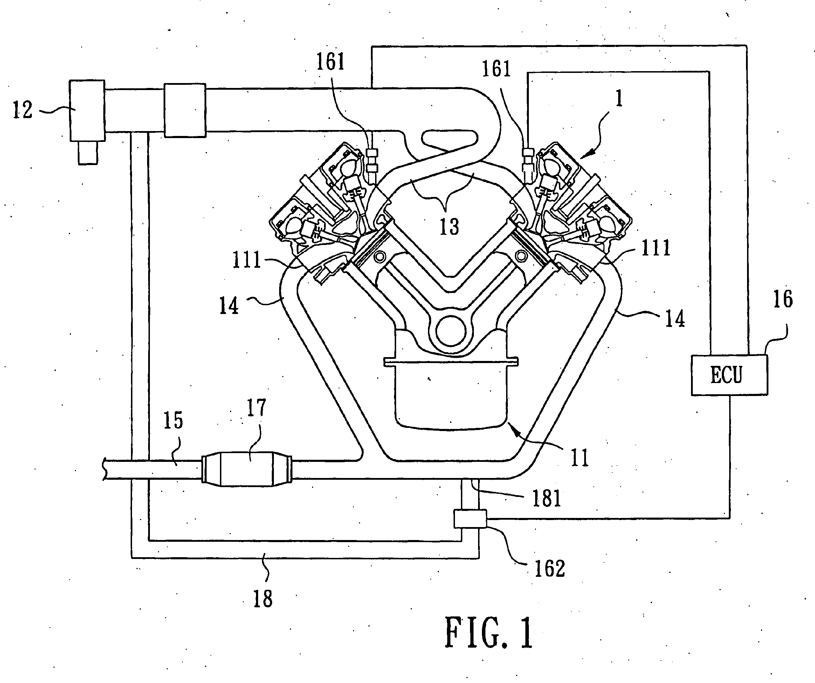

Referring to Figure 1, a conventional car engine exhaust device 1 includes an engine 11, an air filter 12, a pair of intake pipes 13 for guiding air from the air filter 12 into the engine 11, a pair of exhaust pipes 14 for discharging exhaust gas from the engine 11 after combustion, an exhaust conduit 15 connected to the exhaust pipes 14 for removal of exhaust gas, an electronic control unit 16 (as known in the art, abbreviated as ECU) connected to the engine 11 for controlling the operations of the engine 11, a catalytic converter 17 fixedly mounted at a middle section of the exhaust conduit 15, and a pair of nozzles 161 controlled by the electronic control unit 16 and mounted respectively to the ends of the intake pipes 13 at positions proximate to the engine 11.

Nowadays, many countries have been more stringent on emissions standards of exhaust gas. Therefore, manufacturers of vehicles strive to develop products that comply with the relevant regulations and standards. Among them, some manufacturers mount a filtered air-guiding pipe 18 on the exhaust conduit 15 upstream of the catalytic converter 17 for guiding filtered air from the air filter 12 into the exhaust conduit 15. In addition, an electromagnetic valve 162 is disposed on the filtered air-guiding pipe 18 for limiting flow of the filtered air from the filtered air-guiding pipe 18 into the exhaust conduit 15, and is capable of being opened or closed under the control of the electronic control unit 16. When the electromagnetic valve 162 is opened, filtered air is sucked from the filtered air-guiding pipe 18 into the exhaust conduit 15 by means of negative pressure in the exhaust conduit 15. As such, the amount of pollutants that are carried within exhaust gas discharged from the catalytic converter 17 can be reduced significantly.

However, a filtered-air guiding port 181 in the filtered air-guiding pipe 18 is distal from the pair of exhaust pipes 14 of the engine 11. Thus, the filtered air sucked into the exhaust conduit 15 is insufficient, and therefore decreases the work efficiency of the catalytic converter 17. Furthermore, the temperature of exhaust gas discharged from the engine 11 is rather high. This results in malfunction and even damage of the electromagnetic valve 162.

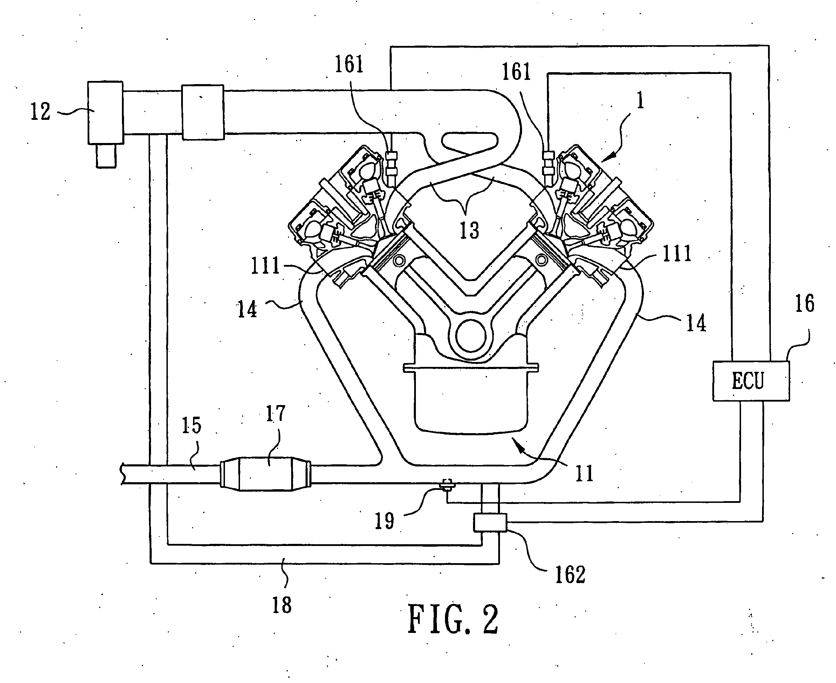

Referring to Figure 2, some manufacturers mount a pair of O₂ sensors 19 respectively on the middle sections of the exhaust pipes 14 for detecting the air fuel ratio (AFR) of exhaust gas flowing therethrough, and for transmitting signals of the detected result to the electronic control unit 16. Hence, the electronic control unit 16 controls the flow rates of the nozzles 161 so as to adjust the ratio of components of the exhaust gas through control of the AFR of a mixture to be fed into the engine 11. Thus, the exhaust gas can comply with regulations of environmental protection.

From the foregoing, it is known that the detection of the ratio of components of the exhaust gas by the pair of O₂ sensors 19 is a rather efficient method. However, since the junction between the filtered air-guiding pipe 18 and the exhaust conduit 15 is disposed adjacent to and is placed upstream of the O₂ sensors 19, filtered air flowing from the filtered air-guiding pipe 18 into the exhaust conduit 15 adversely affects the accuracy of the detection of the O₂ sensors 19. As such, the electronic control unit 16 obtains wrong detection values from the O₂ sensors 19. This causes inadequate AFR of air-fuel mixture to be fed into the engine 11.

Such a state of the art arrangement is disclosed in US 4,450,680 A.

It is desirable to redesign allocation of the O₂ sensors 19 and the filtered air-guiding pipe 18 so as to make eminent improvement on the work efficiency of the catalytic converter 17, and so as to monitor combustion states in the engine 11, thereby meeting the requirement of current regulations of environmental protection.

Therefore, the main object of this invention is to provide an exhaust gas purifying system for a vehicle engine that can overcome the aforesaid drawbacks associated with the prior art.

Accordingly, an exhaust gas purifying system of this invention is adapted for a vehicle engine that has an exhaust port.

The exhaust gas purifying system includes an exhaust pipe, an inner tube, an O₂ sensor, and a filtered air-guiding pipe.

The exhaust pipe is connected fixedly to the engine, and is in fluid communication with the exhaust port in the engine.

The inner tube defines a first air channel therewithin, and is fixedly mounted within and is spaced apart from the first exhaust pipe so as to define an annular second air channel therebetween.

The O₂ sensor is disposed on the exhaust pipe for detecting the AFR of exhaust gas flowing through one of the first and second air channels.

The filtered air-guiding pipe is connected fixedly to the exhaust pipe, is disposed in proximity to the exhaust port in the engine, and guides filtered air into the other one of the first and second air channels.

Other features and advantages of this invention will become apparent in the following detailed description of the preferred embodiments with reference to the accompanying drawings, of which:
Figure 1 is a schematic view of a conventional engine exhaust device for a vehicle engine;
Figure 2 is a schematic view of another conventional engine exhaust device for a vehicle engine;
Figure 3 is a perspective view of the first preferred embodiment of an exhaust gas purifying system for a vehicle engine according to this invention;
Figure 4 is a fragmentary schematic longitudinal sectional view of an exhaust pipe of the first preferred embodiment for illustrating the disposition of an inner tube within an exhaust pipe;
Figure 5 is a schematic cross-sectional view of the exhaust pipe of the first preferred embodiment;
Figure 6 is a schematic view of a positioning member of the first preferred embodiment;
Figure 7 is a fragmentary schematic sectional view of the exhaust pipe of the first preferred embodiment for illustrating a confluence of first and second air channels;
Figure 8 is a perspective view of the second preferred embodiment of an exhaust gas purifying system for a vehicle engine according to this invention;
Figure 9 is a fragmentary schematic longitudinal sectional view of first and second exhaust pipes of the second preferred embodiment; and
Figure 10 is a fragment schematic sectional view of first and second exhaust pipes of the third preferred embodiment of an exhaust gas purifying system for a
vehicle engine according to this invention.

Before this invention is described in greater detail with reference to the accompanying preferred embodiments, it should be noted herein that like elements are denoted by the same reference numerals throughout the disclosure.

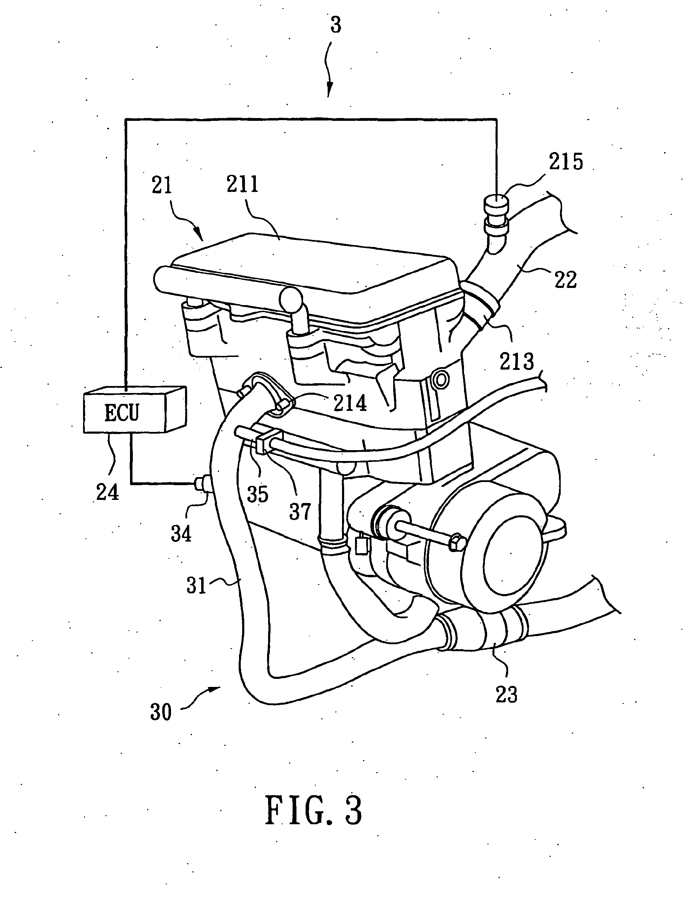

Referring to Figure 3, the first preferred embodiment of an exhaust gas purifying system 3 according to this invention is shown to be adapted for a vehicle, such as a motorcycle, etc. The vehicle includes an engine 21, an intake pipe 22, a catalytic converter 23, and an electronic control unit 24. The engine 21 includes an engine body 211, an intake port 213 for taking in ambient air into the engine body 211, an exhaust port unit that includes an exhaust port 214 to discharge exhaust gas from the engine body 211, and a nozzle 215 controlled by the electronic control unit 24 and mounted on the intake pipe 22 at a position proximate to the engine 21 for injecting fuel into the intake pipe 22.

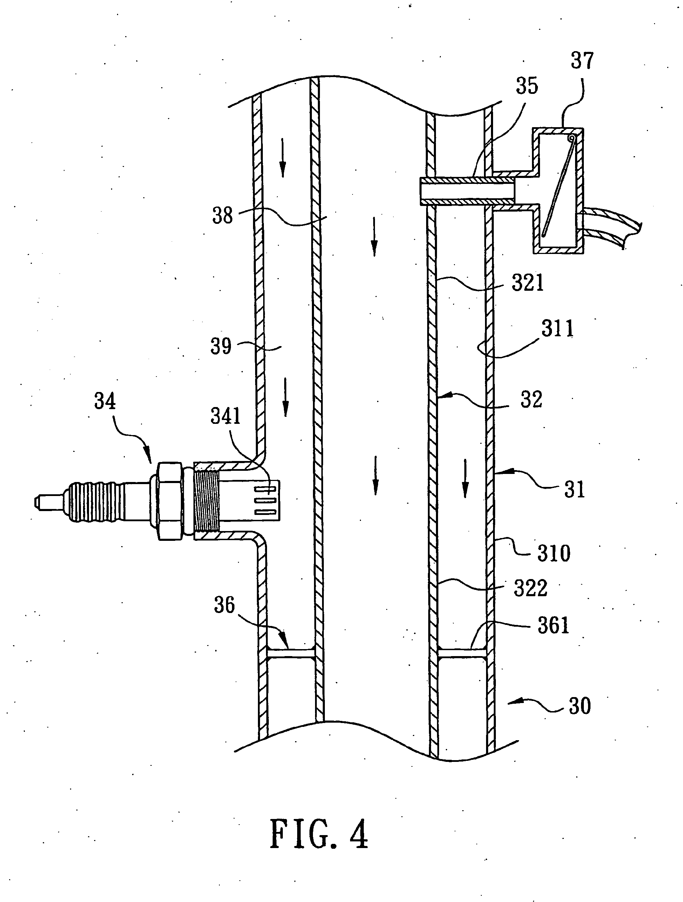

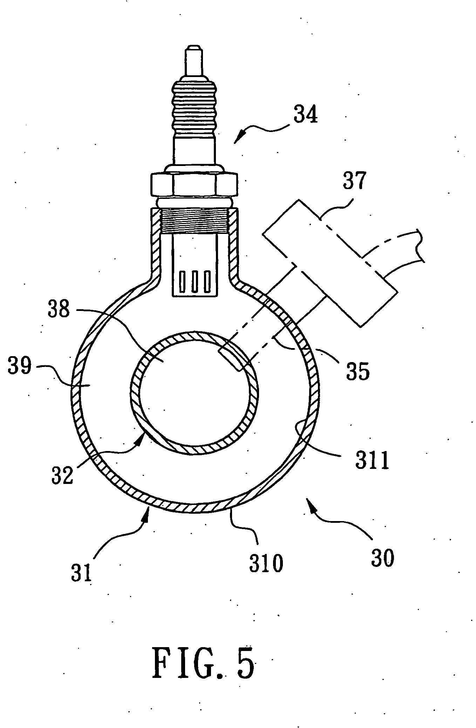

Referring to Figures 4 and 5, the exhaust gas purifying system 3 has a pipe unit 30 that includes an exhaust pipe 31, an inner tube 32, an O₂ sensor 34, a filtered air-guiding pipe 35, a positioning member 36 and a one-way valve 37.

The exhaust pipe 31 is connected fixedly to the engine 21, and is in fluid communication with the exhaust port 214 in the engine 21. The inner tube 32 defines a first air channel 38 therewithin, and is fixedly mounted within and is spaced apart from the exhaust pipe 31 so as to define an annular second air channel 39 therebetween. The catalytic converter 23 is fixedly mounted on the exhaust pipe 31 in a known manner.

The O₂ sensor 34 is mounted on the exhaust pipe 31, and is electrically connected to the electronic control unit 24. The O₂ sensor 34 extends through a wall 310 of exhaust pipe 31, and has a measuring element 341 disposed in the second air channel 39 and spaced apart from the inner tube 32 for detecting the AFR of exhaust gas flowing therethrough, and for transmitting signals of the detected results to the electronic control unit 24. Hence, the electronic control unit 24 adjusts the ratio of components of the exhaust gas through control of the AFR of an air-fuel mixture to be fed into the engine 21. Since the operations of the electronic control unit 24 are well known to those skilled in the art, further description thereof will be omitted herein for the sake of brevity.

The filtered air-guiding pipe 35 extends through the wall 310 of exhaust pipe 31 and a wall 321 of the inner tube 32, and is in spatial communication with the first air channel 38 so as to guide filtered air into the first air channel 38. The filtered air-guiding pipe 35 is disposed in proximity to the exhaust port 214 in the engine 21. As such, the filtered air in the filtered air-guiding pipe 35 can be sucked quickly into the first air channel 38.

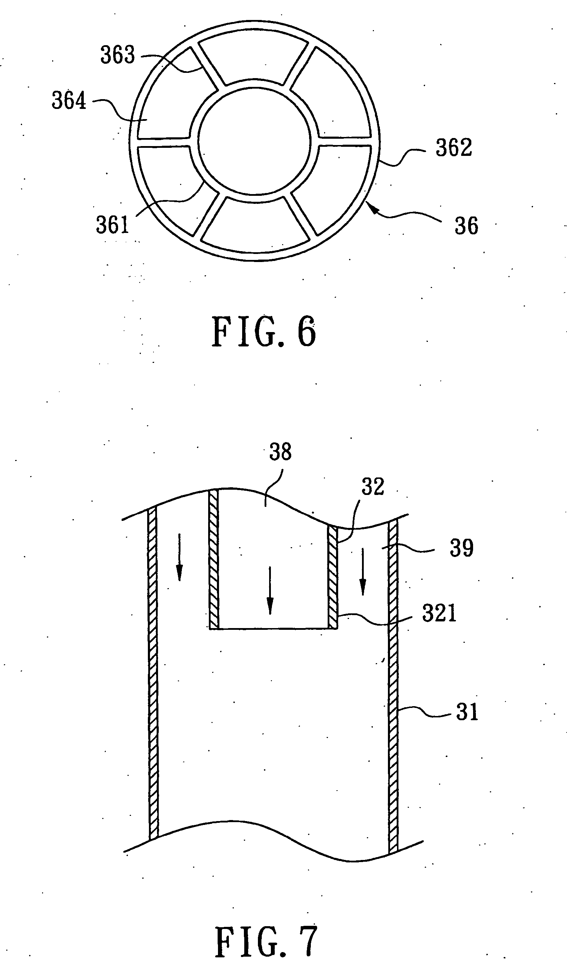

Referring to Figures 4 and 6, the positioning member 36 is disposed within the second air channel 39, and includes an inner ring 361 welded to an outer surface 321 of the inner tube 32, an outer ring 362 welded to an inner surface 311 of the exhaust pipe 31, and a plurality of equidistant connecting rods 363. Each of the connecting rods 363 extends along a radial direction of the inner tube 32, and has a radial inner end formed integrally with the inner ring 361, and a radial outer end formed integrally with the outer ring 362. Any adjacent two of the connecting rods 363 define a space 364 that permits flow of the exhaust gas therethrough.

Referring to Figs. 3, 4, and 5, the one-way valve 37 is disposed on the filtered air-guiding pipe 35 for limiting flow of filtered air from the filtered air-guiding pipe 35 into the first air channel 38. This prevents flow of exhaust gas from the first air channel 38 into the filtered air-guiding pipe 35.

When the engine 12 operates, ambient air is first filtered by an air filter (not shown), and is mixed with fuel sprayed from the nozzle 215 to form an air-fuel mixture for subsequent entry to the engine 21 for final combustion and explosion. Thereafter, exhaust gas is discharged from the engine 21 through the exhaust port 214, and flows into the first and second air channels 38, 39 in the exhaust pipe 31.

In the first air channel 38, the exhaust gas is mixed with the filtered air flowing from the filtered air-guiding pipe 35. In the second air channel 39, the AFR of the exhaust gas is detected by the O₂ sensor 34. Subsequently, the O₂ sensor 34 transmits an electric signal to the electronic control unit 24. Hence, the electronic control unit 24 determines the flow rate of the nozzle 215 in accordance with the AFR of the exhaust gas detected by the O₂ sensor 34.

The optimal AFR is 14.7. When the AFR of the exhaust gas flowing through the exhaust pipe 31 is 14.7, the CO-content in the exhaust gas is between 0.6 and 0.8%. Thus, when the CO-content is greater than 0.8%, the amount of fuel sprayed from the corresponding nozzle 215 is reduced under the control of the electronic control unit 24. When the CO-content is less than 0.6%, the amount of fuel sprayed from the corresponding nozzle 215 is increased under the control of the electronic control unit 24.

Eventually, the exhaust gas flows out of the first and second air channels 38, 39 to mix so as to form a confluent exhaust gas due to the fact that a downstream end 321 (see Figure 7) of the inner tube 32 is disposed in the exhaust pipe 31 downstream of the O₂ sensor 34. Subsequently, the confluent exhaust gas flows into the catalytic converter 23. The amount of pollutants in the confluent exhaust gas is reduced by means of the catalytic converter 23.

Note that, since the O₂ sensor 34 is a very sensitive component, any contact between the O₂ sensor 34 and the filtered air flowing from the filtered air-guiding pipe 35 will diminish the accuracy of the AFR detection of the O₂ sensor 34. The allocation of the O₂ sensor 34 and the filtered air-guiding pipe 35 with respect to the exhaust pipe 31 as proposed in this invention is able to prevent contact between the O₂ sensor 34 and the filtered air to thereby optimize the control of the electronic control unit 24.

Alternatively, the filtered air-guiding pipe 35 is in fluid communication with the second air channel 39, and the O₂ sensor 34 detects the AFR of exhaust gas flowing through the first air channel 38.

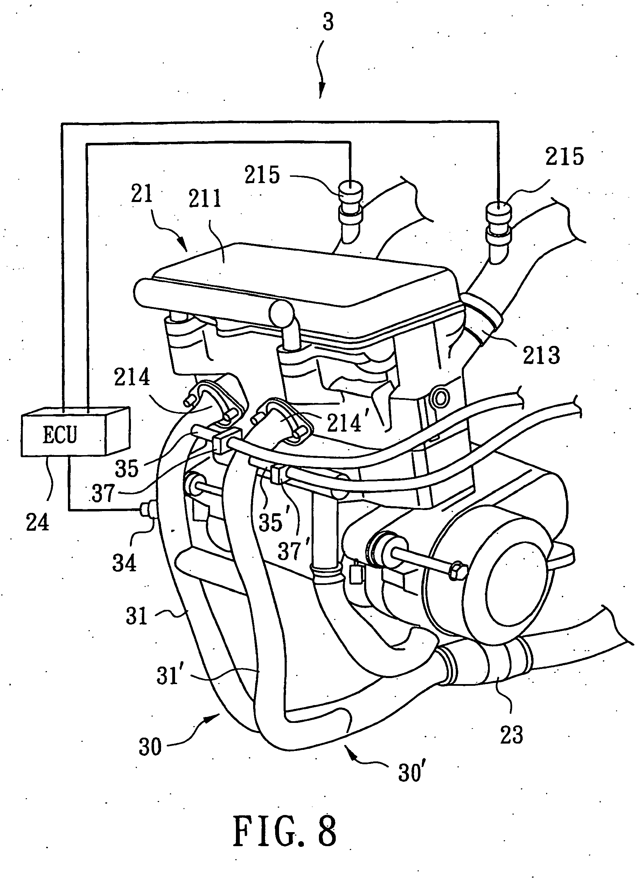

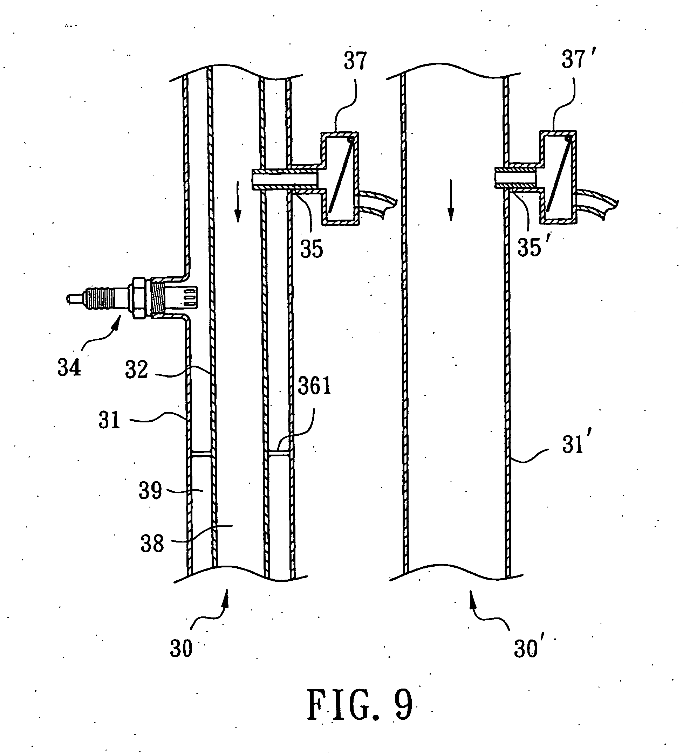

Referring to Figures 8 and 9, the second preferred embodiment of an exhaust gas purifying system 3 according to this invention is adapted for a two-cylinder engine 21. The engine 21 includes an exhaust port unit having a first exhaust port 214 and a second exhaust port 214' . The exhaust gas purifying system 3 includes a pair of first and second pipe units 30, 30'. The first pipe unit 30 is similar to the pipe unit 30 (see Figure 4) of the first preferred embodiment in construction, and includes a first exhaust pipe 31, a first inner tube 32, a first O₂ sensor 34, a first filtered air-guiding pipe 35, a first positioning member 36 and a first one-way valve 37.

The second pipe unit 30' includes a second exhaust pipe 31' connected fixedly to the engine 21 and in fluid communication with the second exhaust port 214' in the engine 21, a second filtered air-guiding pipe 35' connected fixedly to and in fluid communication with the second exhaust pipe 31' , and a second one-way valve 37' disposed on the second filtered air-guiding pipe 35'. The second filtered air-guiding pipe 35'is connected fixedly to and is in fluid communication with the second exhaust pipe 31'. The second one-way valve 37' limits flow of air from the second filtered air-guiding pipe 35' into the second exhaust pipe 31'.

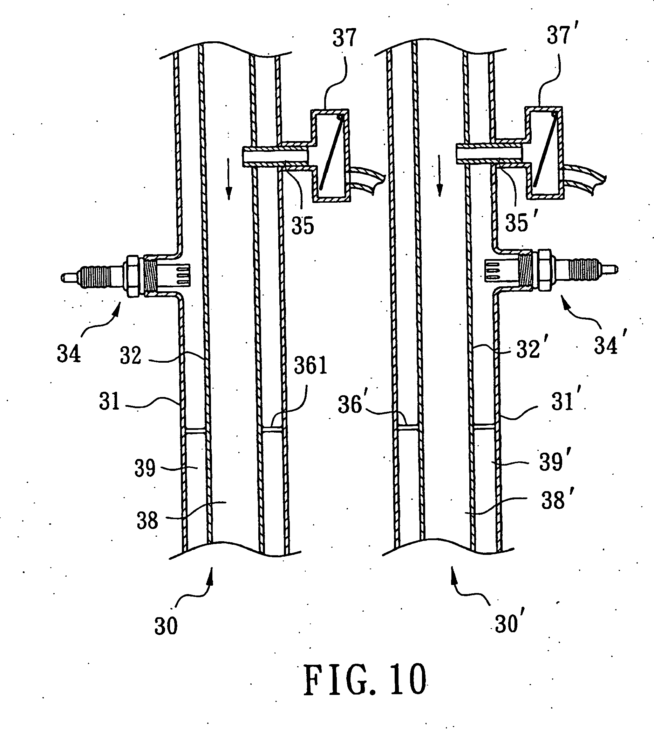

Figure 10 shows the third preferred embodiment of an exhaust gas purifying system 3 according to this invention, which is different from the second preferred embodiment in that the first and second pipes 30, 30' are similar to the pipe unit 30 (see Figure 4) of the first preferred embodiment in construction. The second pipe unit 30' includes a second exhaust pipe 31' , a second inner tube 32', a second O₂ sensor 34', a second filtered air-guiding pipe 35', a second positioning member 36' a second one-way valve 37', and first and second air channels 38', 39'.

## Claims

1. An exhaust gas purifying system (3) for a vehicle engine (21) that includes an exhaust port unit having a first exhaust port (214),
**characterized in that** the exhaust gas purifying system (3) has a first pipe unit (30), which includes:
a first exhaust pipe (31) connected fixedly to the engine (21) and in fluid communication with the first exhaust port (214) in the engine (21);
a first inner tube (32) defining a first air channel (38) therewithin and fixedly mounted within and spaced apart from the first exhaust pipe (31) so as to define an annular second air channel (39) therebetween;
a first O₂ sensor (34) disposed on the first exhaust pipe (31) for detecting the air fuel ratio of exhaust gas flowing through one of the first and second air channels (38, 39); and
a first filtered air-guiding pipe (35) connected fixedly to the first exhaust pipe (31) and disposed in proximity to the first exhaust port (214) in the engine (21) so as to guide filtered air into the other one of the first and second air channels (38, 39).

2. The exhaust gas purifying system (3) as claimed in Claim 1, the exhaust port unit further including a second exhaust port (214'), **characterized by** a second pipe unit (30') that includes:
a second exhaust pipe (31') connected fixedly to the engine (21) and in fluid communication with the second exhaust port (214') in the engine (21); and
a second filtered air-guiding pipe (35') connected fixedly to and in fluid communication with the second exhaustpipe (31') and disposed in proximity to the second exhaust port (214') in the engine (21) so as to guide filtered air into the second exhaust pipe (31').

3. The exhaust gas purifying system (3) as claimed in Claim 1, the exhaust port unit further including a second exhaust port (214'), **characterized by** a second pipe unit (30') that includes:
a second exhaust pipe (31') connected fixedly to the engine (21) and in fluid communication with the second exhaust port (214') in the engine (21);
a second inner tube (32') defining a first air channel-(38') therewithin and fixedly mounted within and spaced apart from the second exhaust pipe (31') of the second pipe unit (30') so as to define an annular second air channel (39') therebetween;
a second O₂ sensor (34') disposed on the second exhaust pipe (21') of the second pipe unit (30') for detecting the air fuel ratio of exhaust gas flowing through one of the first and second air channels (38', 39') in the second pipe unit (30'); and
a second filtered air-guiding pipe (35') connected fixedly to the second exhaust pipe (31') and disposed in proximity to the second exhaust port (214') in the engine (21) so as to guide filtered air into the other one of the first and second air channels (38', 39') in the second pipe unit' (30') .

4. The exhaust gas purifying system (3) as claimed in Claim 3, **characterized by** a one-way valve (37') for limiting flowof air from the second filtered air-guiding pipe (35') into the second exhaust pipe (31').

5. The exhaust gas purifying system (3) as claimed in Claims 1, **characterized by**:
the first O₂ sensor (34) being fixedly mounted on the first exhaust pipe (21) and being spaced apart from the first inner tube (32) of the first pipe unit (30) so as to detect the air fuel ratio of the exhaust gas flowing through the second air channel (39) in the first pipe unit (30); and
the first filtered-air guiding pipe (35) guiding the filtered air into the first air channel (38) in the first pipe unit (30).

6. The exhaust gas purifying system (3) as claimed in Claim 5, further **characterized by** a one-way valve (37) for limiting flow of air from the first filtered air-guiding pipe (35) into the first air channel (38).

7. The exhaust gas purifying system (3) as claimed in Claim 1, **characterized by** a positioning member (36) that is disposed within the second air channel (39) and that includes:
an inner ring (361) welded to an outer surface (321) of the first inner tube (32);
an outer ring (362) welded to an inner surface (311) of the first exhaust pipe (31); and
a plurality of equidistant connecting rods (363), each of the connecting rods (363) extending along a radial direction of the first inner tube (32) and having a radial inner end formed integrally with the inner ring (361), and a radial outer end formed integrally with the outer ring (362), any adjacent two of the connecting rods (363) defining a space (364) that permits f low of the exhaust gas therethrough.

## Patentansprüche

1. Abgasreinigungsanlage (3) für einen Fahrzeugmotor (21), der eine Auslaßkanaleinheit mit einem ersten Auslaßkanal (214) aufweist,
**dadurch gekennzeichnet, daß** die Abgasreinigungsanlage (3) eine erste Rohreinheit (30) hat, die aufweist:
ein erstes Abgasrohr (31), das mit dem Motor (21) fest verbunden ist und mit dem ersten Auslaßkanal (214) im Motor (21) in Fluidverbindung steht;
eine erste Innenröhre (32), die einen ersten Luftkanal (38) darin bildet und im ersten Abgasrohr (31) fest angeordnet und davon beabstandet ist, um einen ringförmigen zweiten Luftkanal (39) dazwischen zu bilden;
eine erste Sauerstoff-Sonde (34), die am ersten Abgasrohr (31) angeordnet ist, zum Detektieren des Kraftstoff/ Luft-Verhältnisses von Abgas, das eine Komponente aus dem ersten und zweiten Luftkanal (38, 39) durchströmt; und
ein erstes Filterluft-Führungsrohr (35), das mit dem ersten Abgasrohr (31) fest verbunden und nahe dem ersten Auslaßkanal (214) im Motor (21) angeordnet ist, um Filterluft in die andere Komponente aus dem ersten und zweiten Luftkanal (38, 39) zu führen.

2. Abgasreinigungsanlage (3) nach Anspruch 1, wobei die Auslaßkanaleinheit ferner einen zweiten Auslaßkanal (214') aufweist, **gekennzeichnet durch** eine zweite Rohreinheit (30'), die aufweist:
ein zweites Abgasrohr (31'), das mit dem Motor (21) fest verbunden ist und mit dem zweiten Auslaßkanal (214') im Motor (21) in Fluidverbindung steht; und
ein zweites Filterluft-Führungsrohr (35'), das mit dem zweiten Abgasrohr (31') fest verbunden ist und in Fluidverbindung steht und nahe dem zweiten Auslaßkanal (214') im Motor (21) angeordnet ist, um Filterluft in das zweite Abgasrohr (31') zu führen.

3. Abgasreinigungsanlage (3) nach Anspruch 1, wobei die Auslaßkanaleinheit ferner einen zweiten Auslaßkanal (214') aufweist, **gekennzeichnet durch** eine zweite Rohreinheit (30'), die aufweist:
ein zweites Abgasrohr (31'), das mit dem Motor (21) fest verbunden ist und mit dem zweiten Auslaßkanal (214') im Motor (21) in Fluidverbindung steht;
eine zweite Innenröhre (32'), die einen ersten Luftkanal (38') darin bildet und im zweiten Abgasrohr (31') der zweiten Rohreinheit (30') fest angeordnet und davon beabstandet ist, um einen ringförmigen zweiten Luftkanal (39') dazwischen zu bilden;
eine zweite Sauerstoff-Sonde (34'), die am zweiten Abgasrohr (21') der zweiten Rohreinheit (30') angeordnet ist, zum Detektieren des Kraftstoff/Luft-Verhältnisses von Abgas, das eine Komponente aus dem ersten und zweiten Luftkanal (38', 39') in der zweiten Rohreinheit (30') durchströmt; und
ein zweites Filterluft-Führungsrohr (35'), das mit dem zweiten Abgasrohr (31') fest verbunden und nahe dem zweiten Auslaßkanal (214') im Motor (21) angeordnet ist, um Filterluft in die andere Komponente aus dem ersten und zweiten Luftkanal (38', 39') der zweiten Rohreinheit (30') zu führen.

4. Abgasreinigungsanlage (3) nach Anspruch 3, **gekennzeichnet durch** ein Einwegventil (37') zum Begrenzen von Luftströmung aus dem zweiten Filterluft-Führungsrohr (35') in das zweite Abgasrohr (31').

5. Abgasreinigungsanlage (3) nach Anspruch 1, **dadurch gekennzeichnet, daß**:
die erste Sauerstoff-Sonde (34) am ersten Abgasrohr (21) fest angeordnet und von der ersten Innenröhre (32) der ersten Rohreinheit (30) beabstandet ist, um das Kraftstoff/Luft-Verhältnis des Abgases zu detektieren, das den zweiten Luftkanal (39) in der ersten Rohreinheit (30) durchströmt; und
das erste Filterluft-Führungsrohr (35) die Filterluft in den ersten Luftkanal (38) in der ersten Rohreinheit (30) führt.

6. Abgasreinigungsanlage (3) nach Anspruch 5, ferner **gekennzeichnet durch** ein Einwegventil (37) zum Begrenzen von Luftströmung aus dem ersten Filterluft-Führungsrohr (35) in den ersten Luftkanal (38).

7. Abgasreinigungsanlage (3) nach Anspruch 1, **gekennzeichnet durch** ein Positionierteil (36), das im zweiten Luftkanal (39) angeordnet ist und das aufweist:
einen Innenring (361), der mit einer Außenfläche (321) der ersten Innenröhre (32) verschweißt ist;
einen Außenring (362), der mit einer Innenfläche (311) des ersten Abgasrohrs (31) verschweißt ist; und
mehrere gleichweit entfernte Verbindungsstangen (363), wobei sich jede der Verbindungsstangen (363) entlang einer Radialrichtung der ersten Innenröhre (32) erstreckt und ein Radialinnenende, das mit dem Innenring (361) einstückig gebildet ist, und ein Radialaußenende hat, das mit dem Außenring (362) einstückig gebildet ist, wobei jeweils zwei benachbarte der Verbindungsstangen (363) einen Raum (364) bilden, der Durchströmen des Abgases ermöglicht.

## Revendications

1. Système de purification de gaz d'échappement (3) pour un moteur de véhicule (21) qui comprend un ensemble d'orifices d'échappement ayant un premier orifice d'échappement (214),
**caractérisé en ce que** le système de purification de gaz d'échappement (3) a un premier ensemble de tuyauterie (30) qui comprend :
une première tuyauterie d'échappement (31) raccordée solidement au moteur (21) et en communication fluide avec le premier orifice d'échappement (214) dans le moteur (21) ;
un premier tube interne (32) définissant un premier canal d'air (38) à l'intérieur et monté solidement à l'intérieur et espacé de la première tuyauterie d'échappement (31) de sorte à définir un second canal d'air annulaire (39) entre eux ;
une premier capteur d'O₂ (34) disposé sur la première tuyauterie d'échappement (31) pour détecter le rapport air/carburant du gaz d'échappement s'écoulant à travers un des premier et second canaux d'air (38, 39) ; et
une première tuyauterie de guidage d'air filtré (35) raccordée solidement à la première tuyauterie d'échappement (31) et disposée à proximité du premier orifice d'échappement (214) dans le moteur (21) de sorte à guider l'air filtré dans l'autre des premier et second canaux d'air (38, 39).

2. Système de purification de gaz d'échappement (3) selon la revendication 1, l'ensemble d'orifices d'échappement comprenant en outre un second orifice d'échappement (214'), **caractérisé par** un second ensemble de tuyauterie (30') qui comprend :
une seconde tuyauterie d'échappement (31') raccordée solidement au moteur (21) et en communication fluide avec le second orifice d'échappement (214') dans le moteur (21); et
une seconde tuyauterie de guidage d'air filtré (35') raccordée solidement à la seconde tuyauterie d'échappement (31') et en communication fluide avec celle-ci, et disposée à proximité du second orifice d'échappement (214') dans le moteur (21) de sorte à guider l'air filtré dans la seconde tuyauterie d'échappement (31').

3. Système de purification de gaz d'échappement (3) selon la revendication 1, l'ensemble d'orifices d'échappement comprenant en outre un second orifice d'échappement (214'), **caractérisé par** un second ensemble de tuyauterie (30') qui comprend :
une seconde tuyauterie d'échappement (31') raccordée solidement au moteur (21) et en communication fluide avec le second orifice d'échappement (214') dans le moteur (21) ;
un second tube interne (32') définissant un premier canal d'air (38') à l'intérieur et monté solidement à l'intérieur et espacé de la seconde tuyauterie d'échappement (31') du second ensemble de tuyauterie (30') de sorte à définir un second canal d'air annulaire (39') entre eux ;
un second capteur d'O₂ (34') disposé sur la seconde tuyauterie d'échappement (21') du second ensemble de tuyauterie (30') pour détecter le rapport air/carburant du gaz d'échappement s'écoulant à travers un des premier et second canaux d'air (38', 39') dans le second ensemble de tuyauterie (30'); et
une seconde tuyauterie de guidage d'air filtré (35') raccordée solidement à la seconde tuyauterie d'échappement (31') et disposée à proximité du second orifice d'échappement (214') dans le moteur (21) de sorte à guider l'air filtré dans l'autre des premier et second canaux d'air (38', 39') dans le second ensemble de tuyauterie (30').

4. Système de purification de gaz d'échappement (3) selon la revendication 3, **caractérisé par** une valve unidirectionnelle (37') destinée à limiter l'écoulement de l'air de la seconde tuyauterie de guidage d'air filtré (35') dans la seconde tuyauterie d'échappement (31').

5. Système de purification de gaz d'échappement (3) selon la revendication 1, **caractérisé par** :
le premier capteur d'O₂ (34) monté solidement sur la première tuyauterie d'échappement (21) et espacé du premier tube interne (32) du premier ensemble de tuyauterie (30) de sorte à détecter le rapport air/carburant du gaz d'échappement s'écoulant à travers le second canal d'air (39) dans le premier ensemble de tuyauterie (30) ; et
la première tuyauterie de guidage d'air filtré (35) guidant l'air filtré à l'intérieur du premier canal d'air (38) dans le premier ensemble de tuyauterie (30).

6. Système de purification de gaz d'échappement (3) selon la revendication 5, **caractérisé en outre par** une valve unidirectionnelle (37) destinée à limiter l'écoulement de l'air de la première tuyauterie de guidage d'air filtré (35) dans le premier canal d'air (38).

7. Système de purification de gaz d'échappement (3) selon la revendication 1, **caractérisé par** un élément de positionnement (36) qui est disposé à l'intérieur du second canal d'air (39) et en ce qu'il comprend :
un anneau interne (361) soudé à une surface externe (321) du premier tube interne (32) ;
un anneau externe (362) soudé à une surface interne (311) de la première tuyauterie d'échappement (31) ; et
une pluralité de tiges de connexion équidistantes (363), chacune des tiges de connexion (363) s'étendant le long d'une direction radiale du premier tube interne (32) et ayant une extrémité interne radiale formée d'un seul tenant avec l'anneau interne (361), et une extrémité externe radiale formée d'un seul tenant avec l'anneau externe (362), deux quelconques des tiges de connexion adjacentes (363) définissant un espace (364) qui permet l'écoulement du gaz d'échappement.
